# FASCICULE DE BREVET EUROPEEN

(11) **EP 3 459 757 B1**
(45) Date de publication et mention de la délivrance du brevet: **30.06.2021**
(21) Numéro de dépôt: 17306265.4
(22) Date de dépôt: 26.09.2017
(51) Int. Cl.: B42D 25/337, G06K 9/00, H04N 1/32

(54) **PROCÉDÉ DE GÉNÉRATION DE MOTIFS GUILLOCHÉS VARIABLES, DISPOSITIF DE MISE EN OEUVRE ET DOCUMENT D'IDENTITÉ COMPORTANT DE TELS MOTIFS**
VERFAHREN ZUM ERZEUGEN VON GUILLOCHIERTEN MOTIVEN, VORRICHTUNG ZU DESSEN UMSETZUNG UND IDENTITÄTSDOKUMENT, DAS SOLCHE MOTIVE UMFASST
METHOD FOR GENERATING VARIABLE GUILLOCHE PATTERNS, IMPLEMENTING DEVICE AND IDENTITY DOCUMENT COMPRISING SUCH PATTERNS

(43) Date de publication de la demande: 27.03.2019
(73) Titulaire: Thales Dis France SA, 92190 Meudon (FR); GEMALTO SA, 92190 Meudon (FR)
(72) Inventeur: LEIBENGUTH, Joseph, 92190 Meudon (FR); FOURNEL, Thierry, 42023 Saint-Etienne Cedex 2 (FR); COLTUC, Dinu, 42023 Saint-Etienne Cedex 2 (FR)
(74) Mandataire: Lotaut, Yacine Diaw

(56) Documents cités:
- EP-A1- 2 325 022
- WO-A1-2014/060700
- WO-A2-2007/121726

## Description

### DOMAINE TECHNIQUE

La présente invention concerne un procédé pour générer un ensemble de motifs guillochés ainsi qu'un dispositif de mise en œuvre de ce procédé. Elle concerne également des documents sécurisés tels qu'une carte d'identité, un permis de conduire, un acte notarié, etc. L'invention trouve des applications dans les domaines de la sécurisation de documents tels que les papiers d'identité.

### ETAT DE LA TECHNIQUE

De façon connue, les documents d'identité comprennent généralement une photographie d'identité de son détenteur ainsi que des données alphanumériques telles que, par exemple, le nom du détenteur, sa date de naissance, sa taille, son adresse, le numéro du document, la date de délivrance du document et/ou l'identité de l'autorité ayant délivré le document.

Pour sécuriser les documents d'identité, il est connu d'associer la photographie d'identité à des guilloches. Ces guilloches forment un réseau de lignes ondulées, superposées à la photographie et visibles à l'œil nu. Les guilloches sont destinées à rendre discernable, lors d'un contrôle d'identité, toute modification frauduleuse de la photographie. Elles permettent notamment de se prémunir contre des modifications de teinte de la photographie, par exemple lors de l'ajout d'une barbe ou de cheveux. Ainsi, les guilloches permettent généralement la mise en œuvre des contrôles de sécurité de niveau 1 (contrôle visuel à l'œil nu) et/ou de niveau 2 (contrôle visuel avec un simple appareillage optique tel qu'une loupe ou une lampe ultraviolet).

Par ailleurs, il est connu également de mettre en œuvre des moyens de protection des données alphanumériques mentionnées sur les documents d'identité afin de se prémunir contre des altérations de ces données comme, par exemple, des modifications de ces mentions alphanumériques.

La protection des données alphanumériques peut être obtenue par des techniques de tatouage numérique (ou watermarking, en termes anglo-saxons) destinées à intégrer des éléments invisibles à l'œil nu dans une photographie d'identité, ces éléments codant des informations prédéfinies. Le tatouage numérique fournit une sécurité de niveau 3 (vérification automatique des données encodées) lors d'un contrôle de sécurité. Ainsi, au moyen d'un appareil de traitement et d'analyse numérique, la photographie d'identité est analysée et les données qui y sont tatouées sont extraites. Une vérification de la cohérence de ces données est ensuite effectuée.

Toutefois, le tatouage numérique présente un certain nombre d'inconvénients. En effet, puisqu'il n'est pas visible à l'œil nu, le tatouage numérique ne permet pas de mettre en œuvre une sécurité de niveau 1 ou 2. La vérification des documents de sécurité tatoués nécessite donc un personnel formé, équipé de moyens d'analyse importants, ce qui limite les contrôles de sécurité notamment les contrôles itinérants. En outre, les tatouages numériques peuvent s'avérer sensibles aux dégradations du document d'identité, dégradations qui peuvent être induites, pendant la durée de validité du document, par l'usure naturelle, l'exposition aux rayons UV, le manque de soins de la part du détenteur, etc. L'analyse des tatouages numériques dégradés peut alors aboutir à une lecture erronée des tatouages, ou bien à une impossibilité de lecture lors du contrôle.

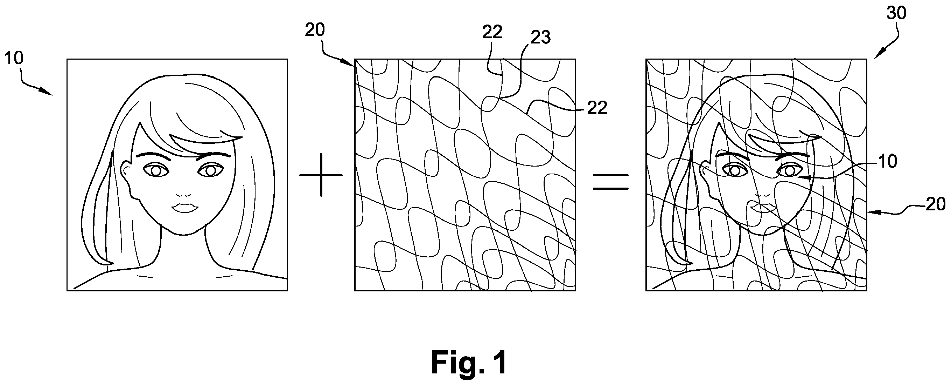

Une technique, à base de guilloches, a également été développée pour sécuriser les données alphanumériques mentionnées sur les documents d'identité. Cette technique propose d'insérer, sur la photographie d'identité, des guilloches variables encodant tout ou partie des données alphanumériques. Des exemples de procédés de sécurisation de documents utilisant de telles guilloches variables sont décrits notamment dans les demandes de brevet EP 2 325 022 A1 et US 2010/0260372 déposées au nom de la demanderesse. Ces guilloches variables comportent généralement un ensemble de lignes guillochées ou un modèle 2D dont l'espacement et/ou l'intersection entre lignes guillochées et/ou l'épaisseur desdites lignes guillochées sont variables. Ces lignes guillochées sont donc liées entre elles par des liens visibles sur la photographie. La figure 1 représente un exemple de photographie 10, un exemple de guilloches bidimensionnelles (ou 2D) de l'art antérieur, référencées 20, ainsi qu'une photographie sécurisée 30 résultant de l'association de la photographie 10 et des guilloches 20. Les liens 23 entre les différentes lignes guillochées 22 des guilloches 20, associés aux lignes guillochées 22 potentiellement rapprochées et/ou épaisses, ont un effet négatif sur la perception visuelle du contenu sous-jacent du document, en particulier de la photographie. En effet, comme le montre la photographie sécurisée 30 de la figure 1, ce type de guilloches 2D gênent la perception visuelle de la photographie et empêche une bonne lisibilité des traits caractéristiques du détenteur du document sécurisé. Ce défaut de perception visuelle empêche la mise en œuvre d'une sécurité de niveau 1, voire de niveau 2, ce qui entraine les inconvénients décrits précédemment d'une mise en œuvre unique d'un niveau 3 de sécurité.

Un document WO 2007/121726 A2 divulgue un document de sécurité et/ou de valeur comprenant un élément graphique, cet élément graphique étant formé de plusieurs lignes essentiellement parallèles au moins dans une région partielle. Un document WO 2014/060700 A1 divulgue un dispositif pour produire un document (40) portant l'identification d'une personne ou d'un animal.

### RESUME DE L'INVENTION

Pour répondre au problème évoqué ci-dessus d'une protection des données alphanumériques contrôlables uniquement par un dispositif de sécurité de niveau 3, le demandeur propose de formater les données alphanumériques sous la forme d'une matrice modulant une ou plusieurs fonctions porteuses, de sorte à générer des motifs guillochés ne gênant pas la perception visuelle de la photographie.

Selon un premier aspect, l'invention concerne, selon la revendication 1, un procédé de génération d'un ensemble de motifs guillochés 1D apposables sur un document, chaque motif guilloché 1D se présentant sous la forme d'une ligne ondulée variable, visible à l'œil nu sur un contenu sous-jacent, chaque motif guilloché étant apte à encoder des données alphanumériques assurant un aspect variable à chaque motif guilloché, le procédé comportant les opérations suivantes :
- formatage des données alphanumériques à encoder sous forme d'un nombre prédéfini de blocs de données d'une taille prédéfinie ;
- génération par bloc d'au moins une fonction porteuse comportant une pluralité de paramètres, les blocs de données formatées formant au moins un des paramètres ; et
- modulation de la fonction porteuse par les blocs de données formatées de sorte à encoder graphiquement les données alphanumériques, chaque bloc de données définissant un motif guilloché, le nombre de blocs de données définissant le nombre de motifs guillochés.

Ce procédé permet de générer un ensemble de motifs guillochés, chaque motif encodant des données alphanumériques de façon à sécuriser le document mais ne perturbant pas visuellement la lecture du document sur lequel l'ensemble est apposé.

Ce procédé peut s'appliquer à toutes sortes de documents sécurisés. Il peut s'appliquer en particulier :
- aux documents d'identité tels que les cartes d'identité, les passeports, les permis de conduire, etc., où les motifs guillochés sont généralement appliqués sur la photographie du détenteur,
- à des documents sécurisés avec ou sans photographie, tels que les actes d'état civil, les actes notariés (brider documents, en termes anglo-saxons) ou encore les documents d'identité mobiles (mobile ID, en termes anglo-saxons), où la totalité du document contient des motifs guillochés, ou
- à des documents de protection des marques (brand protection, en termes anglo-saxons) ou autre marquage physique (par exemple emballages et objets de luxe) dont on cherche à authentifier l'origine.

De façon avantageuse, le formatage est obtenu par application d'une fonction cryptographique de hachage qui, outre la détection de modifications, permet à la fois une décorrélation des données et la maitrise de la taille desdites données à encoder

Selon certains modes de réalisation destinés à authentifier la source de gestion des données, la fonction de hachage est paramétrée par une clé ou combinée à une signature numérique de sorte à renforcer la sécurité au sein d'une infrastructure.

Selon certains modes de réalisation destinés au contrôle des données par un tiers de confiance, la génération de la ou des fonctions porteuses est obtenue par application de règles de génération propre à la source de gestion des données. Cette génération de porteuses peut être d'origine stéganographique ou cryptographique, suivant le niveau mis en œuvre au contrôle.

Selon un ou plusieurs modes de réalisation, la fonction porteuse associée à un bloc de données formatées est modulée localement, chaque donnée du bloc étant codée localement dans le motif guilloché, par interpolation d'un point prédéfini associé de la fonction porteuse auquel on a au préalable fait subir un déplacement quantifié.

La fonction porteuse peut être une fonction sinusoïdale et chaque donnée du bloc de données formatées peut être codée par un déplacement quantifié de l'extremum de la sinusoïde qui lui est associé.

Selon une variante, chaque fonction porteuse peut avoir une allure sinusoïdale à amplitude variable et être définie par une fonction d'interpolation ainsi qu'un ensemble de points d'interpolation destinés à être déplacés selon le bloc de données formatées à encoder.

Qu'elles soient sinusoïdales ou d'allure sinusoïdale à amplitude variable, les fonctions porteuses présentent des fréquences comprises dans une bande de fréquences prédéterminée, jugée visuellement admissible.

Selon une autre variante, lorsque le document destiné à recevoir l'ensemble des motifs guillochés est un document de sécurité, l'interpolation définissant les fonctions porteuses peut être réalisée à partir des stries (ou sillons) correspondant à une empreinte digitale du détenteur du document de sécurité.

Selon un ou plusieurs modes de réalisation, la fonction porteuse associée à un bloc de données formatées est modulée globalement, l'ensemble des données du bloc étant codé globalement dans le motif guilloché, suivant une approche d'étalement de spectre.

La fonction porteuse peut être construite par une combinaison linéaire dans une base de fonctions ondulantes appartenant à une bande de fréquences prédéfinies, et les données du bloc de données formatées peuvent être codées par ajustement des poids de la combinaison linéaire.

Les fonctions ondulantes peuvent être des fonctions cosinus ou sinus correspondant à une bande passante présélectionnée dans un domaine de la transformée en Cosinus Discret.

Selon certains modes de réalisation, le procédé comporte une opération de détection et correction des erreurs d'encodage des données formatées.

Selon certains modes de réalisation, le procédé comporte une opération d'accentuation des différences d'aspect des motifs guillochés par traitement spécifique desdits motifs guillochés dans un plan image. Ces modes de réalisation permettent de coder non seulement des données alphanumériques mais également l'empreinte du détenteur, offrant ainsi une sécurité accrue du document d'identité.

Selon certains modes de réalisation, la fonction porteuse est en partie modulée globalement et en partie modulée localement.

Selon un second aspect, l'invention concerne selon la revendication 15, un dispositif de génération d'un ensemble de motifs guillochés comprenant un ordinateur contenant un ensemble d'instructions qui amènent ledit ordinateur à mettre en œuvre le procédé de génération de motifs guillochés définit précédemment.

Selon un troisième aspect, l'invention concerne, selon la revendication 16, un document d'identité comportant une photographie d'identité et des données alphanumériques relatives au détenteur, la photographie d'identité comportant de façon visible des motifs guillochés générés par le procédé définit ci-dessus, lesdits motifs guillochés codant des données formatées, collectées à partir des données alphanumériques relatives au détenteur.

Selon un mode de réalisation, les motifs guillochés apposés sur la photographie sont perceptuellement contraints.

### BREVE DESCRIPTION DES FIGURES

D'autres avantages et caractéristiques de l'invention apparaîtront à la lecture de la description, illustrée par les figures dans lesquelles :
- La figure 1, déjà décrite, représente un exemple d'une photographie d'identité sur laquelle sont surimprimés des motifs guillochés 2D selon l'art antérieur ;
- La figure 2 représente un exemple d'une photographie d'identité sur laquelle sont surimprimés des motifs guillochés 1D selon l'invention ;
- Les figures 3, 4 et 6 représentent d'autres exemples de motifs guillochés selon l'invention surimprimés sur des photographies d'identité ; et
- La figure 5 représente un diagramme fonctionnel d'un exemple de procédé selon l'invention.

### DESCRIPTION DETAILLEE D'AU MOINS UN MODE DE REALISATION

Un exemple de réalisation d'un procédé pour générer des motifs guillochés 1 D, à saillance visuelle acceptable, est décrit en détail ci-après, en référence aux dessins annexés. Cet exemple illustre les caractéristiques et avantages de l'invention.

Sur les figures, les éléments identiques sont repérés par des références identiques. Pour des questions de lisibilité des figures, les échelles de taille entre éléments représentés ne sont pas respectées.

Le procédé de l'invention propose de générer des motifs guillochés à insérer sur une portion ou sur la totalité d'un document sécurisé tel que ceux cités précédemment. Dans la description qui va suivre, le procédé sera décrit lorsqu'il est appliqué à une portion d'un document sécurisé telle qu'une photographie sur laquelle sont superposés des motifs guillochés, appelés aussi guilloches. L'homme du métier comprendra que le procédé tel qu'il va être décrit peut aussi être mis en œuvre pour un document dont la totalité dudit document comporte un ensemble de motifs guillochés. chacun de ces motifs guillochés est un motif monodimensionnel, ou motif guilloché 1D, chaque motif guilloché 1D étant adapté pour encoder des données alphanumériques telles que les données personnelles du détenteur mentionnées sur le document de sécurité. Chaque motif guilloché 1D se présente sous la forme d'une ligne ondulée variable, visible à l'œil nu sur un contenu sous-jacent, et en particulier sur une photographie, mais dont la saillance visuelle est suffisamment peu intense pour ne pas perturber la perception visuelle dudit contenu sous-jacent, c'est-à-dire du contenu du document positionné sous les motifs guillochés.

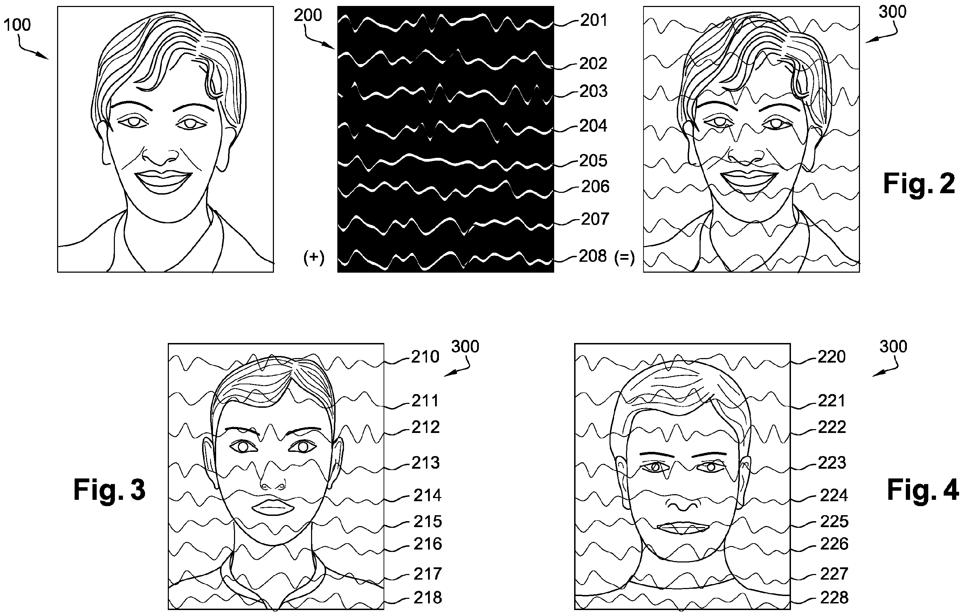

Un exemple d'un ensemble 200 de motifs guillochés 201-208 est représenté sur la figure 2. Cette figure 2 représente également un exemple d'une photographie 100 sur laquelle l'ensemble de motifs guillochés 200 est superposé pour former une photographie sécurisée 300. D'autres exemples de photographies à motifs guillochés superposés sont représentés sur les figures 3 et 4. Comme le montrent les photographies sécurisées 300, chacun des motifs guillochés 201-228 de l'ensemble des motifs guillochés a une grande variabilité. Chacun desdits motifs guillochés de l'ensemble de motifs guillochés est en outre faiblement saillant par rapport à des motifs guillochés de l'art antérieur, ce qui permet de ne pas perturber visuellement les traits principaux du personnage de la photographie 100. Autrement dit, la saillance des motifs guillochés sur le contenu sous-jacent est limitée afin de ne pas favoriser l'attention du contrôleur sur les guilloches.

Comme représenté sur les figures 2, 3 et 4, chacun des motifs guillochés 201 228 de l'ensemble des motifs guillochés, appelés également guilloches, se présente sous la forme d'une ligne ondulée variable, chacune référencée respectivement 201, 202, 203, 204, 205, 206, 207, ou 208 (figure 2), 210, 211, 212, 213, 214, 215, 216, 217, ou 218 (figure 3), 220, 221, 222, 223, 224, 225, 226, 227, ou 228 (figure 4), chaque ligne étant ondulée et irrégulière, et dont les irrégularités correspondent à des données codées, le cas échéant en partie aux porteuses. Dans l'exemple de la figure 2, chaque motif encodant des données alphanumériques, l'ensemble des motifs guillochés code par exemple les données suivantes : Anna THOMSON 021171 2004444521947 6734 Y54A.

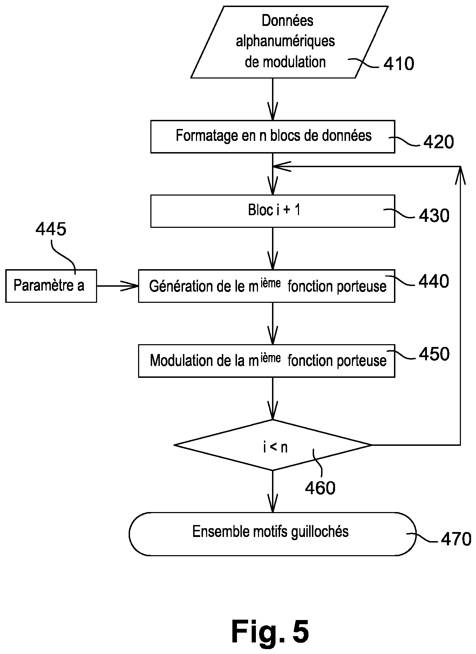

Un exemple du procédé selon l'invention est représenté sur la figure 5. Ce procédé comporte une étape préliminaire 420 de formatage des données alphanumériques 410 à encoder. En effet, pour permettre l'encodage des données au sein des motifs guillochés, les données alphanumériques à encoder 410, par exemple les données alphanumériques mentionnées sur un document d'identité, sont tout d'abord formatées, ou conditionnées, sous la forme d'une matrice d'un nombre prédéterminé n de blocs de données comportant chacun un nombre prédéfini m de bits. Dans un mode de réalisation, le conditionnement des données est réalisé au moyen d'une fonction cryptographique de hachage. Le hachage est un découpage calculé des données alphanumériques mises sous la forme d'une matrice binaire de n blocs de données de m bits. Ce hachage permet une décorrélation des données, ce qui a un effet favorable sur le niveau de saillance des motifs guillochés générés, c'est-à-dire ce qui permet de limiter la saillance desdits motifs guillochés sur le contenu sous-jacent. Le hachage permet en outre une maîtrise de la taille des données vis-à-vis de la capacité d'encodage de chaque motif guilloché, donc de chaque ligne ondulée variable. Par exemple une valeur de hachage codée sur 160 bits peut être encodée selon n=10 lignes (ou motifs guillochés) encodant chacune m=16 bits.

Selon certains modes de réalisation, le hachage est paramétré par une clé privée ou mis en œuvre dans le cadre d'un mécanisme de signature numérique de sorte à renforcer la sécurité au sein d'une infrastructure à clef publique.

L'usage d'un hachage (à clef ou non) présente l'intérêt de fournir, en entrée de l'opération de génération des motifs guillochés, un vecteur de taille fixe quelle que soit la taille et/ou le volume des données alphanumériques à encoder. De plus, le caractère aléatoire du haché renforce la variabilité des motifs guillochés dans l'ensemble des motifs guillochés superposés au contenu sous-jacent.

Selon certains modes de réalisation, une partie au moins des données alphanumériques à formater peut comprendre une partie ou la totalité d'un code de type biométrique, le cas échéant compressé sans perte. Ainsi dans le cadre de la sécurisation d'un document d'identité, il peut être avantageux pour assurer l'authentification de son bénéficiaire, respectivement de son émetteur, de considérer parmi les données alphanumériques une empreinte digitale du détenteur et\ou du support du document (substrat et\ou puce électronique composant le document physique), simultanément contrôlables au moyen de lecteurs dédiés.

Les n blocs de données formatées de la façon décrite ci-dessus sont ensuite utilisés pour moduler une fonction porteuse ou n fonctions porteuses. En effet, le procédé de l'invention comporte, après l'opération de formatage 420 des données alphanumériques, une opération 440 consistant à générer, le cas échéant par bloc de données formatées, une fonction porteuse comportant une pluralité de paramètres (opération 445 de choix des paramètres a). Chaque fonction porteuse, représentée graphiquement par une courbe ondulée, est de la forme explicite y = f(x , a, b), où (x , y) est un couple de coordonnées locales, dans un système cartésien ou tout autre système adapté, où a représente les paramètres de la fonction porteuse et où b représente les paramètres permettant de faire varier ladite fonction porteuse, typiquement un des n blocs de données formatées. Autrement dit, chaque bloc de données formatées module la fonction porteuse de sorte à générer un motif guilloché, c'est-à-dire une ligne de guilloche du type de celles représentées par les références 201-208 sur la figure 2. Si le paramètre a est constant, la porteuse est la même pour les n blocs de données formatées qui modulent donc n fois cette fonction porteuse de sorte à générer n motifs guillochés, ces n motifs guillochés concaténés formant l'ensemble 200 des motifs guillochés soit une image à appliquer sur un document à sécuriser, et en particulier une photographie. Ainsi, chaque bloc de données formatées définit un motif guilloché et le nombre de blocs de données formatées définit le nombre de motifs guillochés d'un ensemble.

Dans l'exemple de la figure 5, chaque bloc i - avec i variant de 0 à n - est incrémenté de 1 à l'étape 430 de sorte que chacun des n blocs de données module à son tour la fonction porteuse y = f(x , a, b), à l'étape 450, afin de générer un motif guilloché. Lorsque les n blocs de données ont modulé la fonction porteuse (étape 460), l'ensemble 200 des motifs guillochés est généré (étape 470).

Selon certains modes de réalisation, la fonction porteuse est modulée localement. Les données formatées d'un bloc de données sont alors encodées localement, c'est-à-dire donnée par donnée, sur une ligne de guilloche. La modulation locale peut être implantée selon une approche d'interpolation. Dans cette approche, les fonctions porteuses sont construites par interpolation de points prédéfinis à l'aide d'une fonction d'interpolation. Les points prédéfinis sont des points remarquables de la courbe ondulée correspondant à la fonction porteuse, appelés point d'interpolation.

En modulation locale, les données formatées sont codées par déplacement, dans un plan image, des points d'interpolation. Selon un mode de réalisation, les abscisses des points d'interpolation sont équidistantes, le signe de leurs ordonnées étant alterné et des '0' insérés entremis. De cette façon, un noyau d'interpolation symétrique (par exemple une fonction spline cubique ou une gaussienne tronquée) conduit à des motifs guillochés ondulés dont les extrema sont les points d'interpolation. Dans ce mode de réalisation, le codage d'un bit à '1' au niveau d'un extremum de la ligne de guilloche courante est réalisé en déplaçant par exemple verticalement cet extremum d'une quantité prédéfinie, sans que ce ne soient modifiés les extrema voisins. L'expression « déplacement vertical » s'entend par un déplacement suivant l'axe y, étant entendu que cet axe de l'amplitude est perpendiculaire à l'axe x des abscisses.

La modulation locale est réalisée dans une bande de fréquences limitée, ce qui répond à la contrainte perceptuelle d'une saillance visuelle peut intense (lignes à pente locale bornée) tout en transmettant un caractère sécuritaire (caractère irrégulier des lignes).

Selon certains modes de réalisation, la fonction porteuse est modulée globalement. Les données formatées d'un bloc de données sont alors encodées globalement à travers une ligne de guilloche entière.

La modulation globale peut être implantée selon une approche d'étalement de spectre. Dans cette approche, les fonctions porteuses peuvent être construites par combinaison linéaire dans une base de fonctions ondulantes appartenant à une bande de fréquences prédéfinie, en fixant les poids à 1 dans cette bande. Les données formatées sont codées par ajustement des poids de la combinaison linéaire. Selon un mode de réalisation, les fonctions de base sont des fonctions Cosinus ou Sinus correspondant à la bande passante présélectionnée dans le domaine de la transformée en Cosinus Discret. Le codage d'un bloc de données formatées dans une ligne de guilloche courante est alors réalisé en ajustant le signe du poids de chaque composante sinusoïdale selon le bit correspondant dans le bloc de données (le poids est basculé à -1 si le bit de donnée est à 1, le poids reste à 1 si le bit de donnée est à 0). Si comme dans le cas de la transformée en cosinus discret, la transformation est réversible, cet ajustement peut être réalisé dans le domaine de la transformée pour obtenir par transformation inverse, le motif guilloché.

Dans certains modes de réalisation, les données formatées de plusieurs blocs de données sont codées dans un même motif guilloché. Une fenêtre d'apodisation élevée à la puissance peut être utilisée afin de provoquer une décroissance régulière plus ou moins rapide aux extrémités de la courbe, ce qui permet un raccordement éventuel de plusieurs courbes dans le cas où plusieurs blocs de données seraient codés dans un même motif guilloché.

La modulation globale a l'avantage d'autoriser un masquage partiel d'une ligne de guilloche, par exemple lorsque le motif guilloché superpose une zone diaprée d'une photographie. En effet, jusqu'à environ 30% d'un motif guilloché masqué peut être détecté et extrait lorsque les données sont codées avec une modulation globale.

La modulation locale et la modulation globale décrites précédemment peuvent être combinées au sein d'un même ensemble de motifs guillochés.

Quel que soit le type de modulation choisi (modulation locale et/ou globale), l'ensemble de motifs guillochés générés est superposé au document ou à la partie de document à sécuriser, comme représenté sur les figures 2 à 4, de sorte que ledit document ou partie de document soit parcouru(e) par un ensemble de plusieurs motifs guillochés avec une saillance visuelle peu intense qui ne perturbe pas la lisibilité du document ou partie de document. Le document ou partie de document contient ainsi un ensemble de motifs guillochés, chaque motif guilloché codant des données alphanumériques qui assurent au moins en partie la sécurité dudit document ou partie de document.

Selon certains modes de réalisation, les n blocs de données peuvent être encodés lors du formatage, en n mot-codes faisant partie d'un code détecteur et correcteur d'erreurs (tel qu'un code de redondance cyclique (CRC) ou de Reed-Solomon) ou de paquets d'erreurs (tel qu'un code entrelacé croisé par exemple à base de codes de Reed-Solomon (codeCIRC)). Un tel encodage permet d'assurer une relecture des données dans des conditions dégradées, à faible rapport signal à bruit. Un tel encodage peut être mis en œuvre dans chacune des modulations ou leur combinaison.

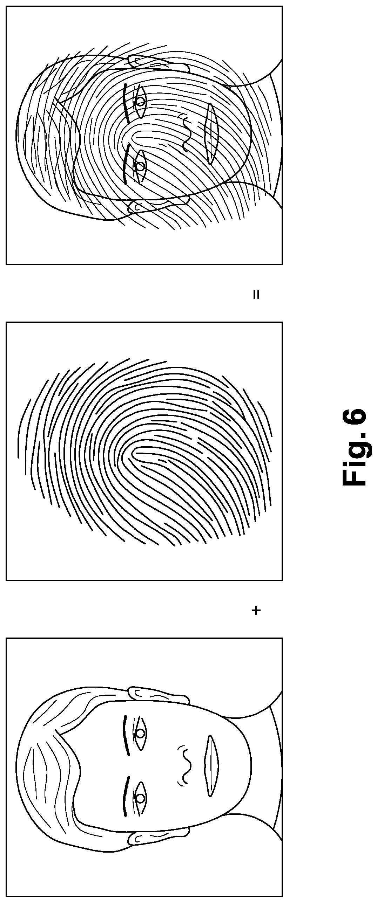

Dans certains modes de réalisation, notamment lorsque le document est un document de sécurité, la fonction porteuse peut être l'ensemble des stries (ou sillons) d'une empreinte digitale du détenteur du document de sécurité. Un exemple d'une photographie sécurisée par des motifs guillochés obtenus à partir de l'empreinte digitale du détenteur est représenté sur la figure 6.

En effet, les stries de l'empreinte digitale peuvent être décrites sous forme de courbes paramétriques. Pour cela, chaque strie peut notamment être échantillonnée au moyen d'un ensemble de m+2 points d'interpolation sélectionnés sur la strie, Pᵢ=(xᵢ,yᵢ), auxquels sont associés les valeurs t_{i,,} longueurs des lignes brisées P₀, P₁, .., Pᵢ du paramètre t destiné à décrire la courbe dans l'intervalle [0,L] où L représente la longueur de la ligne brisée P₀, P₁, .., Pₘ₊₂. Les coordonnées x, respectivement y, peuvent être obtenues de façon explicite au moyen d'une spline paramétrique cumulée cubique s : x(t) = s(t,{tᵢ,xᵢ}) (respectivement y(t) = s(t,{tᵢ,yᵢ})). Ce sont alors chacun des m points d'interpolation Pi des stries (i=1,..,m) qui sont individuellement déplacés d'une distance prédéterminée, par exemple selon la normale à la strie en P_{i,}, suivant la ième donnée bᵢ du bloc b courant à encoder lors de l'étape de modulation locale. De cette façon, le document est sécurisé non seulement par l'ensemble des motifs guillochés, chaque motif guilloché encodant des données propres au détenteur et\ou de l'émetteur, mais également par l'empreinte du détenteur.

Le procédé décrit précédemment permet d'obtenir des motifs guillochés 1D variables i.e. en capacité de supporter des données personnelles tout en revêtant un aspect visuellement fluctuant d'un motif à un autre, admissible respectivement au contenu sous-jacent. La diversification de l'ensemble des motifs guillochés d'un document à un autre peut encore être accentuée au moyen d'un traitement spécifique, par exemple en introduisant une tendance non nécessairement affine pour chacun des motifs guillochés. Au besoin, des grilles, à maille rectangulaire ou triangulaire par exemple, peuvent être facilement formées par combinaison au moyen d'un OU-inclusif, d'ensembles de motifs guillochés obtenus selon l'invention après les avoir orientés de façon adéquate.

L'usage de décalages horizontaux et\ou verticaux comme règle d'agencement des motifs guillochés composants les ensembles peut servir au contrôle par un tiers de confiance. Par exemple, une alternance particulière de motifs guillochés démarrant sur un front montant, respectivement descendant, peut être utilisable au niveau 1 par les contrôleurs.

Lors de la phase de personnalisation de documents identitaires et selon certains modes de réalisation, les ensembles de motifs guillochés ainsi générés peuvent être à l'issue conditionnés et colorisés avant d'être insérés, en particulier au niveau de la photographie d'identité ou du fond s'il est au moins partiellement variable. Ce procédé donne ainsi l'opportunité d'insérer des données personnelles et/ou des caractéristiques de composants physiques dans le but d'empêcher une attaque par substitution et la création ex-nihilo de faux documents.

Bien que décrit à travers un certain nombre d'exemples, variantes et modes de réalisation, le procédé de génération d'un ensemble de motifs guillochés selon l'invention comprend divers variantes, modifications et perfectionnements qui apparaîtront de façon évidente à l'homme du métier, étant entendu que ces variantes, modifications et perfectionnements font partie de la portée de l'invention, telle que revendiquée ci-après.

## Revendications

1. Procédé de génération d'un ensemble de motifs guillochés 1D apposables sur un document, chaque motif guilloché 1D se présentant sous la forme d'une ligne ondulée variable, visible à l'œil nu sur un contenu sous-jacent, chaque motif guilloché (201-228) étant apte à encoder des données alphanumériques assurant un aspect variable à chaque motif guilloché, le procédé comportant les opérations suivantes :
- formatage (420) des données alphanumériques (410) à encoder sous forme d'un nombre prédéfini de blocs de données d'une taille prédéfinie ;
- génération, par bloc de données formatées, d'une fonction porteuse (430) comportant une pluralité de paramètres, les blocs de données formatées formant au moins un desdits paramètres; et
- modulation (450) de la fonction porteuse par les blocs de données formatées de sorte à encoder graphiquement les données alphanumériques (410), chaque bloc de données définissant un motif guilloché (201-228), le nombre de blocs de données (n) définissant le nombre de motifs guillochés.

2. Procédé de génération d'un ensemble de motifs guillochés selon la revendication 1, **caractérisé en ce que** le formatage est obtenu par application d'une fonction cryptographique de hachage.

3. Procédé de génération d'un ensemble de motifs guillochés selon la revendication 2, **caractérisé en ce que** la fonction de hachage est paramétrée par une clé ou combinée à une signature numérique.

4. Procédé de génération d'un ensemble de motifs guillochés selon l'une quelconque des revendications 1 à 3, **caractérisé en ce que** la fonction porteuse associée à un bloc de données formatées est modulée localement, chaque donnée du bloc étant codée localement dans le motif guilloché, par interpolation d'un point prédéfini associé à la fonction porteuse.

5. Procédé de génération d'un ensemble de motifs guillochés selon la revendication 4, **caractérisé en ce que** la fonction porteuse est une fonction sinusoïdale et chaque donnée du bloc de données formatées est codée par un déplacement quantifié d'un extremum de la sinusoïde qui lui est associé.

6. Procédé de génération d'un ensemble de motifs guillochés selon la revendication 4, **caractérisé en ce que** la fonction porteuse présente une allure sinusoïdale à amplitude variable, ladite fonction porteuse étant définie par une fonction d'interpolation et un ensemble de points d'interpolation aptes à être déplacés selon le bloc de données formatées à encoder.

7. Procédé de génération d'un ensemble de motifs guillochés selon la revendication 5 ou 6, **caractérisé en ce que** la fonction porteuse présente des fréquences comprises dans une bande de fréquences prédéterminée, considérée comme visuellement admissible.

8. Procédé de génération d'un ensemble de motifs guillochés selon la revendication 6 ou 7, **caractérisé en ce que** l'interpolation définissant chaque fonction porteuse est réalisée à partir de stries d'une empreinte digitale d'un détenteur du document.

9. Procédé de génération d'un ensemble de motifs guillochés selon l'une quelconque des revendications 1 à 3, **caractérisé en ce que** la fonction porteuse associée à un bloc de données formatées est modulée globalement, l'ensemble des données dudit bloc étant codé globalement dans le motif guilloché, suivant une approche d'étalement de spectre.

10. Procédé de génération d'un ensemble de motifs guillochés selon la revendication 9, **caractérisé en ce que** la fonction porteuse est construite par une combinaison linéaire dans une base de fonctions ondulantes appartenant à une bande de fréquences prédéfinies, les données du bloc de données formatées étant codées par ajustement de poids de la combinaison linéaire.

11. Procédé de génération d'un ensemble de motifs guillochés selon la revendication 10, **caractérisé en ce que** les fonctions ondulantes sont des fonctions cosinus ou sinus correspondant à une bande passante présélectionnée dans un domaine de la transformée en Cosinus Discret.

12. Procédé de génération d'un ensemble de motifs guillochés selon l'une quelconque des revendications 1 à 10, **caractérisé en ce qu'**il comporte une opération de détection et correction des erreurs d'encodage des données formatées.

13. Procédé de génération d'un ensemble de motifs guillochés selon l'une quelconque des revendications 1 à 11, **caractérisé en ce qu'**il comporte une opération d'accentuation des différences d'aspect des motifs guillochés par traitement spécifique desdits motifs guillochés dans un plan image.

14. Procédé de génération d'un ensemble de motifs guillochés selon l'une quelconque des revendications 4 à 6 et 7 à 9, **caractérisé en ce que** la fonction porteuse est en partie modulée globalement et en partie modulée localement.

15. Dispositif de génération d'un ensemble de motifs guillochés comprenant un ordinateur comportant un ensemble d'instructions qui amènent ledit ordinateur à mettre en œuvre le procédé de génération d'un ensemble de motifs guillochés selon l'une quelconque des revendications 1 à 12.

16. Document d'identité comportant une photographie d'identité et des données alphanumériques relatives au détenteur, **caractérisé en ce que** la photographie d'identité (300) comporte de façon visible un ensemble de motifs guillochés (201-228) générés par le procédé selon l'une quelconque des revendications 1 à 12, ledit ensemble de motifs guillochés codant des données formatées, collectées à partir des données alphanumériques relatives au détenteur, chaque motif guilloché étant apte, lui-même, à encoder des données alphanumériques assurant un aspect variable à chaque motif guilloché.

## Patentansprüche

1. Verfahren zum Erzeugen einer Einheit guillochierter 1D-Muster, die an einem Dokument anbringbar sind, wobei jedes guillochierte 1D-Muster in der Form einer variablen Wellenlinie vorliegt, die mit bloßem Auge auf dem darunterliegenden Inhalt sichtbar ist, wobei jedes guillochierte Muster (201-228) in der Lage ist, alphanumerische Daten zu codieren, die einen variablen Aspekt für jedes guillochierte Muster sicherstellen, wobei das Verfahren die folgenden Vorgänge umfasst:
- Formatieren (420) der alphanumerischen Daten (410), die in Form einer vordefinierten Anzahl von Datenblöcken mit einer vordefinierten Größe codiert werden sollen;
- pro Block formatierter Daten Erzeugen einer Trägerfunktion (430), die eine Vielzahl von Parametern umfasst, wobei die Blöcke formatierter Daten mindestens einen der Parameter bilden; und
- Modulieren (450) der Trägerfunktion durch die Blöcke formatierter Daten, die derart formatiert sind, dass sie die alphanumerischen Daten (410) grafisch codieren, wobei jeder Datenblock ein guillochiertes Muster (201-228) definiert, wobei die Anzahl von Datenblöcken (n) die Anzahl der guillochierten Muster definiert.

2. Verfahren zum Erzeugen einer Einheit guillochierter Muster nach Anspruch 1, **dadurch gekennzeichnet, dass** die Formatierung durch Anwenden einer kryptografischen Hash-Funktion erhalten wird.

3. Verfahren zum Erzeugen einer Einheit guillochierter Muster nach Anspruch 2, **dadurch gekennzeichnet, dass** die Hash-Funktion durch einen Schlüssel parametriert oder mit einer digitalen Signatur kombiniert wird.

4. Verfahren zum Erzeugen einer Einheit guillochierter Muster nach einem der Ansprüche 1 bis 3, **dadurch gekennzeichnet, dass** die Trägerfunktion, die mit einem Block formatierter Daten assoziiert ist, lokal moduliert wird, wobei jedes Datum des Blocks lokal in dem guillochierten Muster, durch Interpolation eines vordefinierten Punktes, der mit der Trägerfunktion assoziiert ist, codiert wird.

5. Verfahren zum Erzeugen einer Einheit guillochierter Muster nach Anspruch 4, **dadurch gekennzeichnet, dass** die Trägerfunktion eine Sinusfunktion ist, und jedes Datum des Blocks formatierter Daten durch eine quantifizierte Verlagerung eines Extremwerts der Sinuskurve, die mit diesem assoziiert ist, codiert wird.

6. Verfahren zum Erzeugen einer Einheit guillochierter Muster nach Anspruch 4, **dadurch gekennzeichnet, dass** die Trägerfunktion einen sinusförmigen Verlauf mit variabler Amplitude aufweist, wobei die Trägerfunktion durch eine Interpolationsfunktion und eine Einheit von Interpolationspunkten definiert ist, die in der Lage ist, gemäß dem Block formatierter Daten der codiert werden soll, verlagert zu werden.

7. Verfahren zum Erzeugen einer Einheit guillochierter Muster nach Anspruch 5 oder 6, **dadurch gekennzeichnet, dass** die Trägerfunktion Frequenzen aufweist, die in einem vorbestimmten Frequenzband, das als visuell zulässig angesehen wird, enthalten sind.

8. Verfahren zum Erzeugen einer Einheit guillochierter Muster nach Anspruch 6 oder 7, **dadurch gekennzeichnet, dass** die Interpolation, die jede Trägerfunktion definiert, ausgehend von Leisten eines Fingerabdrucks eines Inhabers des Dokuments ausgeführt wird.

9. Verfahren zum Erzeugen einer Einheit guillochierter Muster nach einem der Ansprüche 1 bis 3, **dadurch gekennzeichnet, dass** die Trägerfunktion, die mit einem Block formatierter Daten assoziiert ist, global moduliert wird, wobei alle Daten des Blocks global in dem guillochierten Muster gemäß einem Ansatz spektraler Spreizung codiert werden.

10. Verfahren zum Erzeugen einer Einheit guillochierter Muster nach Anspruch 9, **dadurch gekennzeichnet, dass** die Trägerfunktion durch eine lineare Kombination in einer Basis von Wellenfunktionen, die zu einem vordefinierten Frequenzband gehören, konstruiert ist, wobei die Daten des Blocks formatierter Daten durch Gewichtsanpassung der linearen Kombination codiert werden.

11. Verfahren zum Erzeugen einer Einheit guillochierter Muster nach Anspruch 10, **dadurch gekennzeichnet, dass** die wellenförmigen Funktionen Kosinus- oder Sinusfunktionen sind, die einer vorausgewählten Bandbreite in einem Bereich der diskreten Kosinustransformation entsprechen.

12. Verfahren zum Erzeugen einer Einheit guillochierter Muster nach einem der Ansprüche 1 bis 10, **dadurch gekennzeichnet, dass** es einen Vorgang zum Erfassen und Korrigieren der Codierungsfehler der formatierten Daten umfasst.

13. Verfahren zum Erzeugen einer Einheit guillochierter Muster nach einem der Ansprüche 1 bis 11, **dadurch gekennzeichnet, dass** es einen Vorgang zum Hervorheben der Aussehensunterschiede der guillochierten Muster durch spezifische Behandlung der guillochierten Muster in einem ebenen Bild umfasst.

14. Verfahren zum Erzeugen einer Einheit guillochierter Muster nach einem der Ansprüche 4 bis 6 und 7 bis 9, **dadurch gekennzeichnet, dass** die Trägerfunktion zum Teil global und zum Teil lokal moduliert wird.

15. Vorrichtung zum Erzeugen einer Einheit guillochierter Muster, die einen Computer umfasst, der eine Einheit von Anweisungen umfasst, die den Computer veranlassen, das Verfahren zum Erzeugen einer Einheit guillochierter Muster nach einem der Ansprüche 1 bis 12 umzusetzen.

16. Identitätsdokument, das ein Ausweisfoto und alphanumerische Daten, die den Inhaber betreffen, umfasst, **dadurch gekennzeichnet, dass** das Ausweisfoto (300) auf sichtbare Art eine Einheit guillochierter Muster (201-228) umfasst, die gemäß dem Verfahren nach einem der Ansprüche 1 bis 12 erzeugt sind, wobei die Einheit guillochierter Muster formatierte Daten codiert, die aus alphanumerischen Daten, die den Inhaber betreffen, gesammelt werden, wobei jedes guillochierte Muster selbst in der Lage ist, alphanumerische Daten zu codieren, die jedem guillochierten Muster ein variables Aussehen gewährleisten.

## Claims

1. A method for generating a set of 1D guilloche patterns that can be overlaid on a document, each 1D guilloche pattern being in the form of a variable wavy line, visible to the naked eye over the underlying content, each guilloche pattern (201-228) being able to encode alphanumeric data providing a variable appearance to each guilloche pattern, the method comprising the following operations:
- formatting (420) the alphanumeric data (410) to be encoded in the form of a predefined number of data blocks of a predefined size;
- generating, for each block of formatted data, a carrier function (430) comprising a plurality of parameters, the blocks of formatted data forming at least one of said parameters; and
- modulating (450) the carrier function by the blocks of formatted data so as to graphically encode the alphanumeric data (410), each data block defining a guilloche pattern (201-228), the number of data blocks (n) defining the number of guilloche patterns.

2. The method for generating a set of guilloche patterns according to claim 1, **characterised in that** the formatting is obtained by applying a cryptographic hash function.

3. The method for generating a set of guilloche patterns according to claim 2, **characterised in that** the hash function is parametrised by a key or combined with a digital signature.

4. The method for generating a set of guilloche patterns according to any one of claims 1 to 3, **characterised in that** the carrier function associated with a block of formatted data is modulated locally, each data item of the block being encoded locally in the guilloche pattern, by interpolation of a predefined point associated with the carrier function.

5. The method for generating a set of guilloche patterns according to claim 4, **characterised in that** the carrier function is a sinusoidal function and each data item of the block of formatted data is encoded by a quantified movement of an extremum of the sinusoid associated with it.

6. The method for generating a set of guilloche patterns according to claim 4, **characterised in that** the carrier function has a sinusoidal shape with variable amplitude, said carrier function being defined by an interpolation function and a set of interpolation points that can be moved according to the block of formatted data to be encoded.

7. The method for generating a set of guilloche patterns according to claim 5 or 6, **characterised in that** the carrier function has frequencies comprised within a predetermined frequency band, considered to be visually admissible.

8. The method for generating a set of guilloche patterns according to claim 6 or 7, **characterised in that** the interpolation defining each carrier function is carried out from striations of a fingerprint of a document holder.

9. The method for generating a set of guilloche patterns according to any one of claims 1 to 3, **characterised in that** the carrier function associated with a block of formatted data is modulated globally, all the data of said block being encoded globally in the guilloche pattern following a spread spectrum approach.

10. The method for generating a set of guilloche patterns according to claim 9, **characterised in that** the carrier function is built by a linear combination in a base of wave functions belonging to a predefined frequency band, the data of the block of formatted data being encoded by weight adjustment of the linear combination.

11. The method for generating a set of guilloche patterns according to claim 10, **characterised in that** the wave functions are cosine or sine functions corresponding to a preselected bandwidth in a discrete cosine transform domain.

12. The method for generating a set of guilloche patterns according to any one of claims 1 to 10, **characterised in that** it comprises an operation of detecting and correcting encoding errors of the formatted data.

13. The method for generating a set of guilloche patterns according to any one of claims 1 to 11, **characterised in that** it comprises an operation of accentuating differences in the appearance of the guilloche patterns by specific processing of said guilloche patterns in an image plane.

14. The method for generating a set of guilloche patterns according to any one of claims 4 to 6 and 7 to 9, **characterised in that** the carrier function is in part globally modulated and in part locally modulated.

15. A device for generating a set of guilloche patterns including a computer comprising a set of instructions that lead said computer to implement the method for generating a set of guilloche patterns according to any one of claims 1 to 12.

16. An identity document comprising an identity photograph and alphanumeric data relative to the holder, **characterised in that** the identity photograph (300) visibly comprises a set of guilloche patterns (201-228) generated by the method according to any one of claims 1 to 12, said set of guilloche patterns encoding formatted data, collected from the alphanumeric data relative to the holder, each guilloche pattern being able, in turn, to encode alphanumeric data ensuring a variable appearance for each guilloche pattern.
